# EUROPÄISCHE PATENTSCHRIFT

(11) **EP 1 023 983 B1**
(45) Veröffentlichungstag und Bekanntmachung des Hinweises auf die Patenterteilung: **26.11.2003**
(21) Anmeldenummer: 00890024.3
(22) Anmeldetag: 27.01.2000
(51) Int. Cl.: B29C 47/12, B29C 47/22

(54) **Vorrichtung zur extrusion von kunststoffprofilen**
Apparatus for extruding plastic profiles
Appareil pour l'extrusion de profilés en matière plastique

(30) Priorität: 28.01.1999 AT 5899 U
(43) Veröffentlichungstag der Anmeldung: 02.08.2000
(73) Patentinhaber: Technoplast Kunststofftechnik Gesellschaft m.b.H., 4563 Micheldorf (AT)
(72) Erfinder: Wegmaier, Rudolf, 4563 Micheldorf (AT); Dorninger, Frank, 4563 Micheldorf (AT); Gugenberger, Walter, 4623 Gunskirchen (AT)
(74) Vertreter: Babeluk, Michael, Dipl.-Ing. Mag.

(56) Entgegenhaltungen:
- EP-A- 0 593 892
- DE-A- 19 829 183
- US-A- 4 789 327
- US-A- 5 102 602
- PATENT ABSTRACTS OF JAPAN vol. 017, no. 524 (M-1483), 21. September 1993 (1993-09-21) & JP 05 138715 A (TSUTSUNAKA PLAST IND CO LTD), 8. Juni 1993 (1993-06-08)

## Beschreibung

Die vorliegende Erfindung betrifft eine Vorrichtung zur Extrusion von Kunststoffprofilen mit einem Extruder zum Plastifizieren und Fördern eines Kunststoffmaterials und mit einer Extrusionsdüse zur Herstellung der Profilgeometrie, wobei in der Extrusionsdüse ein Profilspalt ausgebildet ist, der dem zu extrudierenden Profil entspricht und der durch eine äußere Begrenzungsfläche und mindestens einen Dorn definiert ist.

Profile zur Herstellung von Kunststoffensterrahmen werden durch Extrusion hergestellt, wobei in einem Extruder ein Kunststoffgranulat plastifiziert und zu einer Extrusionsdüse geführt wird, die einen Profilspalt aufweist, der der Geometrie des zu extrudierenden Profils entspricht. Im Anschluss an die Extrusionsdüse wird ein solches Profil zunächst in Trockenkalibriereinrichtungen kalibriert und einer ersten Abkühlung unterzogen, und daran anschließend in einem Wasserbad oder in einem Sprühtank endgültig abgekühlt.

Ein wesentlicher Teil des Aufwands für die Herstellung einer Extrusionslinie für ein neues Profil ist die Abstimmung. Es ist heutzutage auch mit den aufwendigsten Rechen- und Simulationsverfahren nicht möglich, alle relevanten Vorgänge, die in einer Extrusionsdüse oder in einem Extrusionswerkzeug stattfinden, so genau abzubilden, daß ein funktionstüchtiges Extrusionswerkzeug rein konstruktiv entworfen werden kann. In der Praxis ist es erforderlich, zunächst die Extrusionsdüse und die Werkzeuge in einer ersten Version herzustellen, und danach einer Abstimmung zu unterziehen. Bei der Abstimmung, die mit dem Originalmaterial der späteren Profilproduktion durchgeführt wird, werden die Mängel des hergestellten Profils analysiert und durch geringfügige Veränderungen an der Extrusionsdüse und den Extrusionswerkzeugen verbessert. Maßnahmen, die während der Abstimmphase durchgeführt werden, sind beispielsweise geringfügige Veränderungen der Geometrie der Bauteile oder die Veränderung der Temperaturverteilung innerhalb der Bauteile durch zusätzliche Beheizung, Kühlung oder Isolation. Da es für solche Änderungen erforderlich ist, die entsprechenden Werkzeuge zu zerlegen und entsprechend nachzubearbeiten, ist der Aufwand für die Abstimmung sehr groß.

Durch die technologische Weiterentwicklung sind in den letzten Jahren große Fortschritte bei der Produktivität von Werkzeugen erzielt worden. Dadurch war es möglich, die Kosten für die Herstellung der Werkzeuge erheblich abzusenken. Da jedoch der Aufwand für die Abstimmung im wesentlichen gleich geblieben ist, wird hier ein erhebliches Einsparungspotential gesehen. Dazu ist es erforderlich, insbesonders die Anzahl der Abstimmfahrten zu verringern. Besonders dringend ist dieser Wunsch bei Werkzeugen, die für kleine oder kleinste Stückzahlen vorgesehen sind. So sind beispielsweise Prototypwerkzeuge nur für wenige Stunden Produktion ausgelegt, um Versuche mit neuen Profilgeometrien oder neuen Werkstoffen durchführen zu können. Es ist möglich, solche Prototypwerkzeuge sehr einfach und kostengünstig herzustellen, da eine hohe Produktionsgeschwindigkeit oder eine lange Lebensdauer nicht erforderlich sind. Da die Versuchsläufe in der Regel von qualifiziertem Personal durchgeführt werden, ist es auch nicht notwendig, eine besondere Benutzerfreundlichkeit oder Toleranz gegenüber Fehlbedienungen vorzusehen. Gerade bei solchen Werkzeugen besteht jedoch ein besonderer Bedarf nach Extrusionsdüsen, die nicht oder nur minimal abgestimmt werden müssen.

Aus der EP 0 593 892 A ist ein Profilwerkzeug für einen Extruder bekannt, bei dem im Strömungskanal des Werkzeugs Temperierelemente angeordnet sind, durch die das plastifizierte Kunststoffmaterial in einzelnen Bereichen des Strömungsquerschnitts gezielt erwärmt werden kann. Auf diese Weise können geometrisch bedingte Ungleichmäßigkeiten bei der Durchströmung des Profilspalts kompensiert werden. Es hat sich jedoch herausgestellt, daß es mit solchen Maßnahmen sehr schwierig ist, gezielt Eingriffe bei der Herstellung der Profile durchzuführen. Einerseits können die Strömungsverhältnisse zwischen den Heizelementen und dem eigentlichen Profilspalt nicht oder nur unzureichend vorausgesagt werden, so daß es schwierig ist zu entscheiden, in welchem Bereich eine gezielte Erwärmung durchzuführen ist. Andererseits reagiert eine solche Vorrichtung sehr träge, so daß eine vorgenommene Veränderung erst nach geraumer Zeit in ihren Auswirkungen voll ersichtlich ist. Es ist daher auch für Extrusionsfachleute äußerst schwierig, auf diese Weise eine Abstimmung vorzunehmen.

DE-A-19829183 zeigt eine Vorrichtung zur Trennung beweglicher Einsätze und Bauteile von mit thermoplastischen Kunstoffen durchströmten Fließkanälen.

Aufgabe der vorliegenden Erfindung ist es, die oben beschriebene Vorrichtung so weiterzubilden, dass der Aufwand für die Abstimmung so klein wie möglich gehalten werden kann.

Erfindungsgemäß ist dabei vorgesehen, daß ein Mittel zur betriebsmäßigen Veränderung der Dicke des Profilspalts in mindestens einem vorbestimmten Bereich zwischen dem Dorn und der äußeren Begrenzungsfläche vorgesehen ist und daß weiters ein Mittel zur Kühlung ausgewählter Bereiche des extrudierten Profils am Düsenaustritt vorgesehen ist. Wenn beispielsweise bei einer Abstimmfahrt erkannt wird, daß Mängel an dem Profil möglicherweise darauf zurückzuführen sind, daß die Strömungsgeschwindigkeit des Materials in einem bestimmten Profilabschnitt zu groß ist, dann kann durch eine Verkleinerung des entsprechenden Abschnitts des Profilspalts im Extrusionswerkzeug gezielt ein Eingriff vorgenommen werden. Da dieser Eingriff bei laufendem Extrusionsvorgang durchgeführt werden kann, ist der damit verbundene Aufwand minimal. Wenn andererseits festgestellt wird, daß die Strömungsgeschwindigkeit des Materials in einem Profilabschnitt zu groß ist, der nicht durch eine Veränderung des Profilspalts beeinflußt werden kann, so kann durch eine gezielte Abkühlung der Reibungswiderstand im nachfolgenden Kalibrierwerkzeug erhöht werden. Auf diese Weise wird der entsprechende Profilabschnitt verlangsamt. Diese Maßnahmen werden vor allem in komplizierteren Profilabschnitten, wie Dichtungsnuten oder bei Rippen oder Profilvorsprüngen zu treffen sein.

Eine besonders einfache und günstige Lösung ist dadurch gekennzeichnet, daß das Mittel zur Veränderung der Dicke des Profilspalts dazu ausgebildet ist, die äußere Begrenzungsfläche elastisch zu verformen. Auf diese Weise wird vermieden, daß an den Grenzflächen allfällig beweglicher Glieder Grate oder Riefen im extrudierten Profil entstehen.

Besonders günstig ist es, wenn mindestens ein Teil der äußeren Begrenzungsfläche durch einen dünnwandigen Steg gebildet ist, der zur Veränderung der Dicke des Profilspalts beweglich ausgebildet ist. Auf diese Weise kann eine besonders feine Einstellung erreicht werden. Vorzugsweise ist das Mittel zur Veränderung der Dicke des Profilspalts als Druckschraube ausgebildet, die im Bereich der äußeren Begrenzungsfläche angreift. Es handelt sich dabei um eine konstruktiv besonders einfache Lösung, die insbesonders für Prototypwerkzeuge ausreichend ist.

Es hat sich herausgestellt, daß es ausreichend ist, die großflächigeren ebenen Profilbereiche mit einer variablen Profilgeometrie zu versehen, um in den allermeisten Fällen zu befriedigenden Lösungen zu kommen. Vorzugsweise ist daher vorgesehen, daß das Mittel zur Veränderung der Profildicke an einem großflächigen ebenen Profilbereich angeordnet ist.

In einer besonders bevorzugten Ausführungsvariante der vorliegenden Erfindung ist vorgesehen, dass die äußere Begrenzungsfläche abschnittsweise kühlbar ausgebildet ist. Wie oben bereits beschrieben worden ist, ist es bereits bekannt, durch thermische Beeinflussung eine Profilabstimmung zu erreichen. Die Nachteile der bekannten Lösungen, wie das langsame Ansprechverhalten und die schlecht vorhersehbare Wirkung, können jedoch durch verschiedene Maßnahmen deutlich verringert werden. Auf diese Weise wird nicht nur der Strömungswiderstand einzelner Profilteile in der nachfolgenden Trockenkalibrierung beeinflußt, sondern auch bereits in der Extrusionsdüse eine gewisse Wirkung hervorgerufen. Besonders günstig ist, wenn das Mittel zur Kühlung ausgewählter Bereiche des extrudierten Profils mit Luft durchströmbare Düsen im Bereich des Austritts des Profils aus der Extrusionsdüse aufweist, die auf das Profil gerichtet sind. Die Kühlung durch einen Luftstrom besitzt den Vorteil, dass kein besonderes Kühlmedium verwendet wird, das nach der Verwendung entsorgt oder wiederaufbereitet werden muß. Besonders günstig ist es dabei, wenn mit den Düsen eine Einrichtung zur Kühlung von Luft auf eine Temperatur unterhalb der Umgebungstemperatur vorgesehen ist. Es hat sich herausgestellt, daß damit mit wesentlich geringeren Luftmengen gearbeitet werden kann, so daß eine möglicherweise unerwünschte thermische Beeinflussung der Extrusionsdüse verringert werden kann.

Ein besonders kompakter und stabiler Aufbau kann dadurch erreicht werden, daß die Düsen in die Extrusionsdüse integriert sind.

Andererseits wird eine verbesserte Flexibilität dadurch erreicht, daß die Düsen an einer Stirnseite der Extrusionsdüse befestigt sind. Weiters erfolgt bei dieser Lösung eine geringere Abkühlung der umgebenden Teile der Extrusionsdüse.

Falls es für die Erzielung eines erhöhten Glanzes an vorbestimmten Teilen der Profiloberfläche erforderlich ist, können auch zusätzlich Mittel zur Erwärmung ausgewählter Bereiche des Profils am Düsenaustritt vorgesehen sein. Dies erfolgt am einfachsten dadurch, daß die entsprechenden Profilabschnitte mit heißer Luft angeströmt werden.

In der Folge wird die Erfindung anhand des in den Figuren dargestellten Ausführungsbeispiels näher erläutert. Es zeigen die
Fig. 1 eine schematische Gesamtdarstellung einer Extrusionsvorrichtung,
Fig. 2 eine Draufsicht auf eine erfindungsgemäße Extrusionsdüse,
Fig. 3 einen Schnitt nach Linie III-III in Fig. 2 und
Fig. 4 einen teilweisen Schnitt nach Linie IV-IV in Fig. 2.

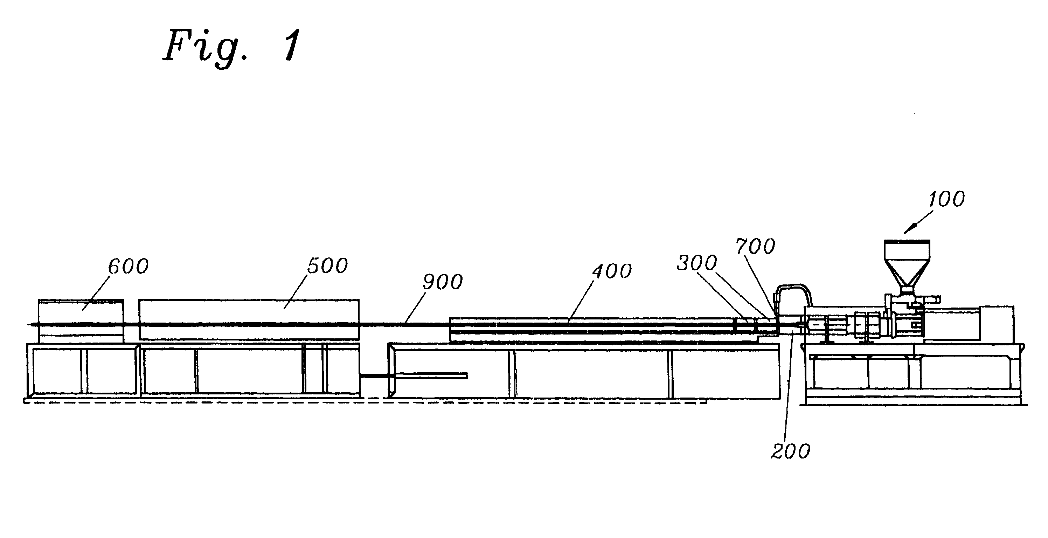

In der Fig. 1 ist der allgemeine Aufbau einer Extrusionsvorrichtung oder Extrusionslinie dargestellt. Mit 100 ist ein Extruder bezeichnet, der mit einer Extrusionsdüse 200 versehen ist. Stromabwärts der Extrusionsdüse 200 sind zwei Trockenkalibrierwerkzeuge 300 angeordnet, an die sich eine Naßkalibriervorrichtung 400 anschließt, die in der Form von sogenannten Wirbelbädem ausgebildet ist. Es handelt sich dabei um eine mit Kühlwasser gefüllte Wanne, die in Längsrichtung durchströmt wird und die Kalibrierblenden aufweist, um die gewünschte Form des Profils 900 zu sichern. Ein Raupenabzug 500 sichert den Transport des Profils, und eine Säge 600 schneidet das Profil 900 in der gewünschten Länge.

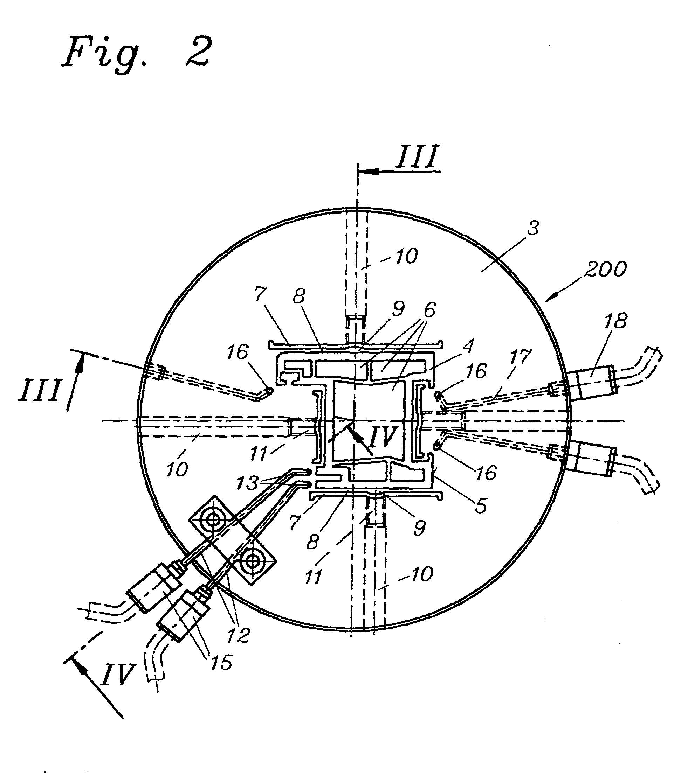

In der Fig. 2 ist die Extrusionsdüse 200 in einer Ansicht auf ihre stromabwärtige Stirnfläche 3 dargestellt. Im mittleren Bereich der Extrusionsdüse 200 ist der Profilspalt 4 für ein zu extrudierendes Fensterprofil ausgebildet. Der Profilspalt 4 ist an seinem äußeren Umfang durch eine äußere Begrenzungsfläche 5 definiert, während die Hohlräume des zu extrudierenden Profils durch Dorne 6 festgelegt werden. Parallel zu größeren Abschnitten der äußeren Begrenzungsfläche 5 sind in der Extrusionsdüse 200 Membranschlitze 7 ausgebildet, so daß zwischen den Membranschlitzen 7 und der äußeren Begrenzungsfläche 5 des Profilspalts 4 Stege 8 verbleiben, deren Dicke etwa in der Größenordnung der Wandstärke des Profils, also der Breite des Profilspalts 4, ist. In ihrem mittleren Bereich besitzen die Stege 8 einen verstärkten Bereich 9. Senkrecht zu den Stegen 8 und parallel zu der Stirnfläche 3 der Extrusionsdüse 200 sind Bohrungen 10 angeordnet, die in ihrem inneren Bereich einen Gewindeabschnitt 11 aufweisen. In diese Bohrungen 10 kann eine nicht dargestellte Schraube oder Gewindespindel eingeführt werden, die mit dem Gewindeabschnitt 11 in Eingriff steht und auf den verstärkten Abschnitt 9 des Steges 8 Druck ausüben kann. Der ausgeübte Druck kann durch Drehen der Gewindespindel über ein Handrad od. dgl. fein eingestellt werden. Auf diese Weise kann durch elastische Verformung der Stege 8 die Breite des Profilspalts 4 in den betreffenden Bereichen geringfügig verändert werden. Dies reicht jedoch aus, um den Strömungswiderstand und damit die Fließgeschwindigkeit zu beeinflussen.

An der Stirnfläche 3 der Extrusionsdüse 200 sind weiters mit Kühlluft durchströmbare Rohre 12 befestigt, an deren vorderem Ende Düsen 13 angeordnet sind, die so ausgerichtet sind, daß der Luftstrom ausgewählte Teile des nicht dargestellten Profils unmittelbar nach dem Austritt aus der Extrusionsdüse 200 trifft. Die Rohre 12 sind über Befestigungslaschen 14 an der Stirnfläche 3 befestigt. Mit 15 sind Kühleinrichtungen in Form von Wirbelrohren angedeutet, die aufgrund einer sehr schnellen Drallbewegung eine Abkühlung des Luftstromes bewirken, wodurch die Kühlwirkung verbessert wird.

Eine alternative Lösung für die Kühlung der Profilabschnitte ist in der Fig. 2 durch die Düsen 16 gezeigt, die über Bohrungen 17 mit Druckluftanschlüssen 18 in Verbindung stehen. Bei dieser Lösung ist es nicht erforderlich, an die Stirnfläche 3 der Extrusionsdüse 200 Anbauteile anzubringen.

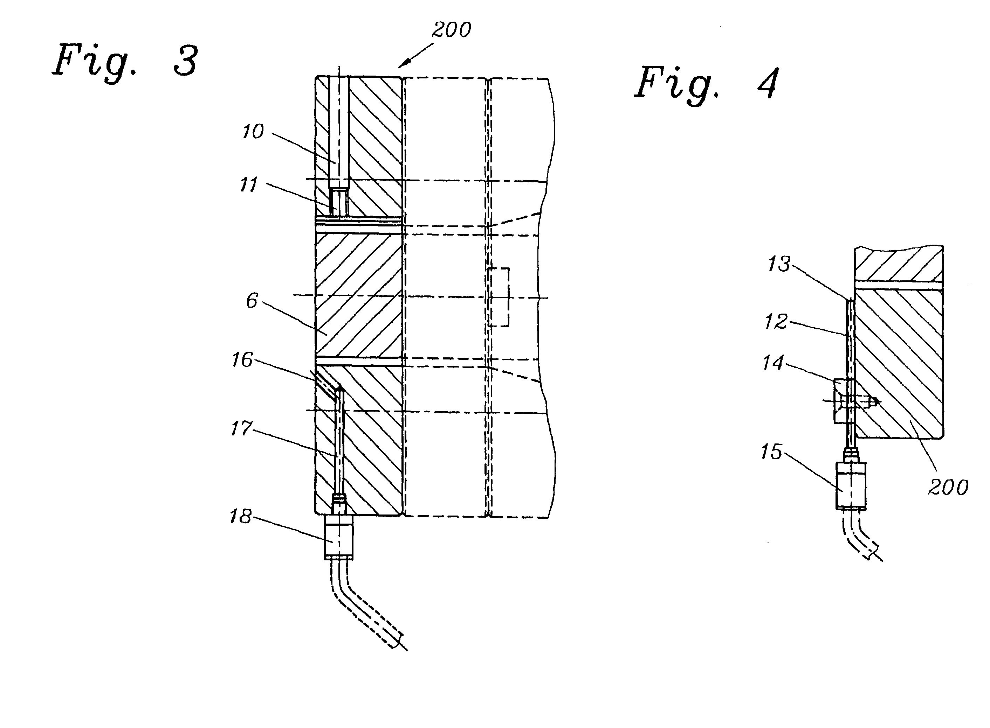

In der Fig. 3 ist die zweite Alternative für die Anbringung der Düsen 16 dargestellt, während in der Fig. 4 die erste Lösung mit den Düsen 13 dargestellt ist.

Durch eine feine Einstellung der Schraubspindel und durch eine entsprechende mengenmäßige Regulierung der durch die Düsen 13 bzw. 16 strömenden Kühlluft, kann mit einfachen Mitteln schnell und während eines Extrusionsvorganges eine Beeinflussung der Extrusion in einem weiten Umfang vorgenommen werden. Wenn der Extrusionsfachmann beispielsweise bestimmte Mängel im hergestellten Profil darauf zurückführen kann, daß an einer bestimmten Stelle des Profils die Fließgeschwindigkeit des Materials im Bereich der Extrusionsdüse zu hoch ist, so können sofort entsprechende Maßnahmen gesetzt werden. Besteht dieses Problem im Bereich großer Wandabschnitte des Profils, so wird eine Verkleinerung des Profilspalts 4 in diesem Bereich durch Anziehen der jeweiligen Schraubspindel eine mögliche Lösung darstellen. Falls dieses Problem jedoch im Bereich von Dichtungsnuten od. dgl. auftritt, kann durch eine Verstärkung der Luftzufuhr durch die betreffenden Düsen 13 bzw. 16 eine lokale Abkühlung des Profils unmittelbar nach dem Austritt aus der Extrusionsdüse 200 bewirkt werden. Dies erhöht den Widerstand in der nachfolgenden Trockenkalibrierung, wodurch sich die lokale Strömungsgeschwindigkeit verringert. Bei den außen an der Stirnfläche 3 der Extrusionsdüse 200 angebrachten Luftaustrittsdüsen 13 kann zusätzlich noch durch eine geringfügige räumliche Verschiebung eine Feinabstimmung erzielt werden.

Bei einer Abstimmung eines herkömmlichen Extrusionswerkzeuges ist es im Schnitt etwa fünfmal erforderlich, die Extrusionsdüse zu zerlegen, um feinste mechanische Nachbearbeitungen im Bereich des Profilspalts vorzunehmen. Mit der vorliegenden Erfindung ist es möglich, solche Nachbearbeitungen weitestgehend überflüssig zu machen. Die vorliegende Erfindung ist besonders geeignet, für sogenannte Prototyp-Werkzeuge, d. h. für Anwendungsfälle, bei denen mit geringen Kosten schnell ein Profil akzeptabler Qualität hergestellt werden kann. Falls die entsprechenden Fachleute auch während der Extrusion zur Verfügung stehen, können mit einem solchen Werkzeug jedoch auch durchaus mittlere Stückzahlen gefertigt werden.

## Patentansprüche

1. Vorrichtung zur Extrusion von Kunststoffprofilen mit einem Extruder (100) zum Plastifizieren und Fördern eines Kunststoffmaterials und mit einer Extrusionsdüse (200) zur Herstellung der Profilgeometrie, wobei in der Extrusionsdüse (200) ein Profilspalt (4) ausgebildet ist, der dem zu extrudierenden Profil entspricht und der durch eine äußere Begrenzungsfläche (5) und mindestens einen Dorn (6) definiert ist, **dadurch gekennzeichnet, dass** ein Mittel zur betriebsmäßigen Veränderung der Dicke des Profilspalts (4) in mindestens einem vorbestimmten Bereich zwischen dem Dom (6) und der äußeren Begrenzungsfläche (5) vorgesehen ist und daß weiters ein Mittel zur Kühlung ausgewählter Bereiche des extrudierten Profils (900) am Düsenaustritt vorgesehen ist.

2. Vorrichtung nach Anspruch 1, **dadurch gekennzeichnet, daß** das Mittel zur Veränderung der Dicke des Profilspalts (4) dazu ausgebildet ist, die äußere Begrenzungsfläche (5) elastisch zu verformen.

3. Vorrichtung nach einem der Ansprüche 1 oder 2, **dadurch gekennzeichnet, daß** mindestens ein Teil der äußeren Begrenzungsfläche (5) durch einen dünnwandigen Steg (8) gebildet ist, der zur Veränderung der Dicke des Profilspalts (4) beweglich ausgebildet ist.

4. Vorrichtung nach einem der Ansprüche 1 bis 3, **dadurch gekennzeichnet, daß** das Mittel zur Veränderung der Dicke des Profilspalts (4) als Druckschraube ausgebildet ist, die im Bereich der äußeren Begrenzungsfläche (5) angreift.

5. Vorrichtung nach einem der Ansprüche 1 bis 4, **dadurch gekennzeichnet, daß** das Mittel zur Veränderung der Profildicke an einem großflächigen ebenen Profilbereich angeordnet ist.

6. Vorrichtung nach einem der Ansprüche 1 bis 5, **dadurch gekennzeichnet, daß** die äußere Begrenzungsfläche (5) der Extrusionsdüse (200) abschnittsweise kühlbar ausgebildet ist.

7. Vorrichtung nach einem der Ansprüche 1 bis 6, **dadurch gekennzeichnet, daß** das Mittel zur Kühlung ausgewählter Bereiche des extrudierten Profils (900) mit Luft durchströmbare Düsen (13, 16) im Bereich des Austritts des Profils (900) aus der Extrusionsdüse (200) aufweist, die auf das Profil (900) gerichtet sind.

8. Vorrichtung nach Anspruch 7, **dadurch gekennzeichnet, daß** mit den Düsen (13, 16) eine Einrichtung zur Kühlung von Luft auf eine Temperatur unterhalb der Umgebungstemperatur vorgesehen ist.

9. Vorrichtung nach Anspruch 7 oder 8, **dadurch gekennzeichnet, daß** die Düsen (16) in die Extrusionsdüse (200) integriert sind.

10. Vorrichtung nach einem der Ansprüche 1 bis 10, **dadurch gekennzeichnet, daß** die Düsen (13) an einer Stirnfläche (3) der Extrusionsdüse (200) befestigt sind.

11. Vorrichtung nach einem der Ansprüche 1 bis 10, **dadurch gekennzeichnet, daß** zusätzlich Mittel zur Erwärmung ausgewählter Bereiche des Profils am Düsenaustritt vorgesehen sind.

## Claims

1. Device for the extrusion of plastic profiles with an extruder (100) for the melting and delivery of a plastic material and with an extrusion die (200) for the production of the profile geometry, whereas a profile slot (4) corresponding to the profile to be extruded and being defined by an outer periphery (5) and by at least one arbor is provided in the extrusion die (200), wherein a means for operational change of the profile slot's (4) thickness is provided in at least one predetermined area between the arbor (6) and the outer periphery (5) and a means for cooling selected areas of the extruded profile (900) is provided at the exit of the die.

2. Device according to claim 1, wherein the means for the change of the profile slot's (4) thickness is designed to elastically deform the outer periphery (5).

3. Device according to one of the claims 1 or 2, wherein at least one part of the outer periphery (5) is constituted by a thin-walled web (8) that is mobile for the alteration of the profile slot's (4) thickness.

4. Device according to one of the claims 1 through 3, wherein the means for altering the thickness of the profile slot (4) is designed as a pressure screw acting upon the outer periphery (5).

5. Device according to one of the claims 1 through 4, wherein the means for altering the profile thickness is arranged on an even profile area with a big surface.

6. Device according to one of the claims 1 through 5, wherein the outer periphery (5) of the extrusion die (200) is designed so that it may be cooled down section after section.

7. Device according to one of the claims 1 through 6, wherein the means for cooling selected areas of the extruded profile (900) is provided, in the area where the profile (900) exits the extrusion die (200), with nozzles (13, 16) oriented toward the profile (900) and through which air may flow.

8. Device according to claim 7, wherein the nozzles (13, 16) are provided together with a device for cooling air to a temperature below the ambient temperature.

9. Device according to claim 7 or 8, wherein the nozzles (16) are integrated in the extrusion die (200).

10. Device according to one of the claims 1 through 9, wherein the nozzles (13) are fastened on a front side (3) of the extrusion die (200).

11. Device according to one of the claims 1 through 10, wherein means for heating selected areas of the profile are additionally provided at the die's exit.

## Revendications

1. Dispositif pour l'extrusion de profilés en matière plastique, comprenant une extrudeuse (100) pour plastifier et transporter une matière plastique, et comprenant une buse d'extrusion (200) pour réaliser la géométrie du profilé, la buse d'extrusion (200) étant pourvue d'une fente de profilé (4) correspondant au profilé à extruder et définie par une surface de limitation extérieure (5) et par au moins un mandrin (6),
**caractérisé en ce qu'**
un moyen est prévu pour modifier pendant le fonctionnement l'épaisseur de la fente de profilé (4) dans au moins une zone prédéterminée entre le mandrin (6) et la surface de limitation extérieure (5), et **en ce qu'**en outre un moyen est prévu pour refroidir des zones choisies du profilé extrudé (900) au niveau de la sortie de buse.

2. Dispositif selon la revendication 1,
**caractérisé en ce que**
le moyen pour modifier l'épaisseur de la fente de profilé (4) est configuré pour déformer de manière élastique la surface de limitation extérieure (5).

3. Dispositif selon l'une des revendications 1 ou 2,
**caractérisé en ce qu'**
au moins une partie de la surface de limitation extérieure (5) est formée par une nervure (8) à parois minces, qui est configurée de façon mobile pour modifier l'épaisseur de la fente de profilé (4).

4. Dispositif selon l'une des revendications 1 à 3,
**caractérisé en ce que**
le moyen pour modifier l'épaisseur de la fente de profilé (4) est configuré comme vis de pression, qui intervient dans la zone de la surface de limitation extérieure (5).

5. Dispositif selon l'une des revendications 1 à 4,
**caractérisé en ce que**
le moyen pour modifier l'épaisseur du profilé est disposé sur une zone de profilé plane d'une grande surface. 1 à 5,

6. Dispositif selon l'une des revendications 1 à 5,
**caractérisé en ce que**
la surface de limitation extérieure (5) de la buse d'extrusion (200) est configurée de manière à pour pouvoir être refroidie par segments.

7. Dispositif selon l'une des revendications 1 à 6,
**caractérisé en ce que**
le moyen pour refroidir des zones choisies du profilé extrudé (900) présente des buses (13, 16) pouvant être traversées par de l'air dans la zone de sortie du profilé (900) de la buse d'extrusion (200), qui sont dirigées sur le profilé (900).

8. Dispositif selon la revendication 7,
**caractérisé en ce que**
par les buses (13, 16) une installation de refroidissement de l'air à une température inférieure à la température ambiante est prévue.

9. Dispositif selon la revendication 7 ou 8,
**caractérisé en ce que**
les buses (16) sont intégrées dans la buse d'extrusion (200).

10. Dispositif selon l'une des revendications 1 à 10,
**caractérisé en ce que**
les buses (13) sont fixées à une surface frontale (3) de la buse d'extrusion (200).

11. Dispositif selon l'une des revendications 1 à 10,
**caractérisé en ce qu'**
en outre des moyens pour chauffer des zones choisies du profilé sont prévus à la sortie de buse.
